(19) Europäisches Patentamt
European Patent Office
Office européen des brevets

(11) **EP 4 693 966 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**H04L 1/00** (2006.01)

(21) Application number: **24777992.9**

(52) Cooperative Patent Classification (CPC):
**H04L 1/00; H04L 5/00**

(22) Date of filing: **26.03.2024**

(86) International application number:
**PCT/CN2024/083724**

(87) International publication number:
**WO 2024/199204 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023 CN 202310324750**

(71) Applicant: **Apogee Networks, LLC
Dallas, TX 75201 (US)**

(72) Inventors:
• **JIANG, Qi
Shanghai 201206 (CN)**
• **WANG, Ping
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57) Disclosed in the present application are a method and apparatus used in a node for wireless communication. The method comprises: a first node receiving first signaling; receiving a first RS in a first RS resource; and sending first channel information, wherein the starting of a first symbol which carries the first channel information is not earlier than a Y-th symbol after the last symbol which is occupied by the first signaling; the value of Y is related to whether the first channel information comprises a first type, and the first type meets at least one of the following conditions: channel information which is recovered by a receiver on the basis of the received first type is unknown to the first node; a generator for generating the first type is obtained on the basis of training; and the first type does not belong to CSI which is defined by 3GPP Rel-17 or a previous version. The present application improves the processing of CSI reporting in different scenarios, and optimizes the occupation time of a processing unit according to requirements, thereby avoiding the waste of the processing capability while meeting the requirements of CSI reporting for the processing capability.

FIG. 1

101 Receive first signaling
102 Receive a first reference signal in a first reference signal resource
103 Send first channel information
AA First node

## Description

## Technical Field

The present application relates to a transmission method and apparatus in a wireless communication system, in particular to a transmission method and apparatus for a CSI-RS (Channel State Information Reference Signal).

## Background Art

The application scenarios of wireless communication systems are becoming increasingly diversified in future, and different application scenarios impose different performance requirements on the systems. In order to meet different performance requirements of various application scenarios, it was decided at the #72 plenary meeting of the 3GPP (3rd Generation Partner Project) RAN (Radio Access Network) to conduct research on the new radio technology (NR) (or 5G). At the #75 plenary meeting of the 3GPP RAN, the WI (Work Item) of the new radio (NR) technology was approved, and the standardization work on the NR was started.

At the 3GPP RAN #88e meeting and the 3GPP Rel-18 (Release-18) workshop, the application of AI (Artificial Intelligence)/ML (Machine Learning) in physical layers of the wireless communication systems has received extensive attention and discussion. Using the AI/ML to enhance CSI feedback to reduce overhead and improve accuracy is generally considered as one of the important applications of ML/AI in the physical layers.

In traditional wireless communications, UE (User Equipment) reporting may comprise at least one of various types of auxiliary information, such as CSI, auxiliary information related to beam management, and auxiliary information related to positioning, wherein the types of the CSI comprise a CRI (CSI-RS Resource Indicator), an RI (Rank Indicator), a PMI (Precoding Matrix Indicator), or a CQI (Channel Quality Indicator), etc.

A network device selects appropriate transmission parameters for the UE according to the UE reporting, such as a camping cell, an MCS (Modulation and Coding Scheme), a TPMI (Transmitted Precoding Matrix Indicator), a TCI (Transmission Configuration Indication), and other parameters. In addition, the UE reporting may be used for optimizing network parameters, such as better cell coverage, switching base stations on or off according to UE locations, etc.

## Summary of the Invention

The applicant has found through research that there are great differences between the calculation of ML/AI-based CSI reporting and the calculation of traditional CSI reporting. The two require different processing capabilities and also have different requirements for processing unit occupation. Therefore, when an ML/AI-based CSI reporting technology is introduced, how the UE determines time for occupying processing units by ML/AI-based CSI reporting is a problem that needs to be solved.

In view of the above problem, the present application discloses a solution. It should be noted that although the original intention of the present application is for ML/AI scenarios, the present application can also be applied to other non-ML/AI scenarios; and further, using a unified design solution for different scenarios (such as other non-ML/AI scenarios including but are not limited to capacity enhancement systems, short-range communication systems, unlicensed frequency domain communications, IoT (Internet of Things), URLLC (Ultra Reliable Low Latency Communication) networks, Internet of Vehicles, etc.) also helps to reduce hardware complexity and costs. In case of no conflict, embodiments and features in the embodiments in any node of the present application may be applied to any other node. In case of no conflict, the embodiments and features in the embodiments of the present application may be arbitrarily combined with each other.

In particular, the interpretation of the terminologies, nouns, functions, and variables in the present application (if not specifically noted) may refer to the definitions in the specification protocols TS36 series, TS38 series, and TS37 series of 3GPP. If necessary, reference can be made to 3GPP standards TS38.211, TS38.212, TS38.213, TS38.214, TS38.215, TS38.321, TS38.331, TS38.305, TS38.304, and TS37.355 to assist in understanding the present application.

As one embodiment, the interpretation of the terminologies in the present application refers to the definitions in the specification protocol TS36 series of 3GPP.

As one embodiment, the interpretation of the terminologies in the present application refers to the definitions in the specification protocol TS38 series of 3GPP.

As one embodiment, the interpretation of the terminologies in the present application refers to the definitions in the specification protocol TS37 series of 3GPP.

As one embodiment, the interpretation of the terminologies in the present application refers to the definitions in the specification protocol of an IEEE (Institute of Electrical and Electronics Engineers).

The present application discloses a method used in a first node for wireless communication, comprising:

receiving first signaling; receiving a first reference signal in a first reference signal resource; and sending first channel information, wherein the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and a value of the Y is related to whether the first channel information comprises a first type, and the first type meets at least one of the following conditions:

- channel information which is recovered by a recipient on the basis of the received first type is unknown to the first node;
- a generator for generating the first type is obtained on the basis of training; and
- the first type does not belong to CSI which is defined by 3GPP Rel-17 or a previous version of 3GPP Rel-17.

As one embodiment, the problem to be solved by the present application comprises: how to determine the time required for calculating the first channel information.

As one embodiment, the characteristics of the above method comprise: determining time for occupying a processing unit for calculating the first channel information by whether the first channel information comprises a first type, thereby solving the above problem.

As one embodiment, the characteristics of the above method comprise: the first channel information comprises ML/AI-based CSI reporting.

As one embodiment, the characteristics of the above method comprise: selecting different processing unit occupation time for different types of CSI reporting.

As one embodiment, the benefits of the above method comprise: compared with traditional CSI reporting, when the first channel information comprises ML/AI-based CSI reporting, there are different requirements for processing unit occupation. The present application sets different processing unit occupation time for different types of CSI reporting, and flexibly and reasonably allocates processing units according to the requirements of the first channel information; and avoids the waste of the processing capability while meeting the requirements of first channel information reporting on the processing capability.

According to one aspect of the present application, the above method is characterized in that the first channel information comprises the first type, and the value of the Y depends on a first integer; the first channel information does not comprise the first type, and the value of the Y depends on a second integer; and the first integer is different from the second integer.

As one embodiment, the benefits of the above method comprise: when the first channel information comprises the first type, the calculation time for processing the first channel information depends on a first integer, thereby optimizing the system design and facilitating the appropriate selection of a quantity and time of processing unit occupation.

As one embodiment, the benefits of the above method comprise: when the first channel information does not comprise the first type, the calculation time for processing the first channel information depends on a second integer, thereby maintaining good backward compatibility while optimizing the system design.

According to one aspect of the present application, the above method is characterized in that the first channel information comprises the first type, the value of the Y is related to whether the first channel information also comprises a target type set, and the target type set comprises at least one CSI type; and candidates of the CSI type comprise at least one of an L1-RSRP, a CRI, an RI, a PMI, a CQI, and an LI.

As one embodiment, the characteristics of the above method comprise: when the first channel information comprises the first type, it is still necessary to set the time for occupying a processing unit for the first channel information calculation by whether the first channel information comprises CSI reporting which is defined by 3GPP Rel-17 or a previous version of 3GPP Rel-17.

As one embodiment, the benefits of the above method comprise: reporting first channel information with different processing capability requirements may use different processing unit occupation time.

As one embodiment, the benefits of the above method comprise: when the first channel information comprises multiple different CSI contents, the time for occupying a processing unit for the reporting of the first channel information is related to the multiple different CSI contents.

According to one aspect of the present application, the above method is characterized in that the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

As one embodiment, the characteristics of the above method comprise: when the first channel information comprises both the first type and CSI which is defined by 3GPP Rel-17 or a previous version of 3GPP Rel-17, the time value for occupying a processing unit by the first channel information is selected on the basis of a type with the longer processing unit occupancy time, thereby ensuring that the calculation of the first channel information can be completed within the given time.

As one embodiment, the characteristics of the above method comprise: when the first channel information comprises only the first type, the time for occupying a processing unit is only determined by the first type, thereby avoiding the waste of the processing capability.

As one embodiment, the benefits of the above method comprise: reporting first channel information with different processing capability requirements may use different processing unit time, thereby avoiding the waste of a processing unit while taking into account the processing capability requirements.

According to one aspect of the present application, the above method is characterized in that the value of the Y is related to a quantity of processing units which are supported by the first node.

As one embodiment, the characteristics of the above method comprise: a quantity of processing units which are occupied within Y symbols is not greater than a quantity of processing units which are supported by the first node.

As one embodiment, the benefits of the above method comprise: ensuring that a quantity of processing units which are occupied within the Y symbols does not exceed a quantity of processing units which are supported by the first node.

As one embodiment, the benefits of the above method comprise: making full use of processing units which are supported by the first node to process the calculation and reporting of first channel information.

According to one aspect of the present application, the above method is characterized in that the value of the Y is related to a quantity of unoccupied processing units which are supported by the first node.

As one embodiment, the characteristics of the above method comprise: a quantity of processing units which are occupied within the Y symbols is not greater than a quantity of unoccupied processing units which are supported by the first node.

As one embodiment, the benefits of the above method comprise: ensuring that a quantity of processing units which are occupied within the Y symbols does not exceed a quantity of unoccupied processing units which are supported by the first node.

As one embodiment, the benefits of the above method comprise: making full use of unoccupied processing units which are supported by the first node to process the calculation and reporting of first channel information.

According to one aspect of the present application, the above method is characterized in that the value of the Y is related to at least one of the three: a subcarrier spacing used by the first signaling, a subcarrier spacing used by the first reference signal, or a subcarrier spacing used by the first channel information.

As one embodiment, the characteristics of the above method comprise: the first signaling, the first reference signal, and the first channel information are transmitted in different physical channels, may use different subcarrier spacings, and have different symbol durations; and the above method associates the value of Y with at least one of the three, thereby ensuring that the value of the Y can meet the requirement for processing capability under the conditions of different subcarrier spacings.

According to one aspect of the present application, the above method is characterized in that the first node comprises one piece of user equipment.

According to one aspect of the present application, the above method is characterized in that the first node comprises one relay node.

According to one aspect of the present application, the above method is characterized in that the first node has AI/ML capabilities.

According to one aspect of the present application, the above method is characterized in that the first node supports AI/ML-based CSI calculation.

According to one aspect of the present application, the above method is characterized in that the first node supports AI/ML-based CSI reporting.

The present application discloses a method used in a second node for wireless communication, comprising:

sending first signaling; sending a first reference signal in a first reference signal resource; and receiving first channel information,
wherein the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by the second node on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

According to one aspect of the present application, the above method is characterized in that the first channel information comprises the first type, and the value of the Y depends on a first integer; the first channel information does not comprise the first type, and the value of the Y depends on a second integer; and the first integer is different from the second integer.

According to one aspect of the present application, the above method is characterized in that the first channel information comprises the first type, the value of the Y is related to whether the first channel information also comprises a target type set, and the target type set comprises at least one CSI type; and candidates of the CSI type comprise at least one of an L1-RSRP, a CRI, an RI, a PMI, a CQI, and an LI.

According to one aspect of the present application, the above method is characterized in that the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

According to one aspect of the present application, the above method is characterized in that the value of the Y is related to a quantity of processing units which are supported by a sender of the first channel information.

According to one aspect of the present application, the above method is characterized in that the value of the Y is related to a quantity of unoccupied processing units which are supported by a sender of the first channel information.

According to one aspect of the present application, the above method is characterized in that the value of the Y is related to at least one of the three: a subcarrier spacing used by the first signaling, a subcarrier spacing used by the first reference signal, or a subcarrier spacing used by the first channel information.

According to one aspect of the present application, the above method is characterized in that the second node is a base station.

According to one aspect of the present application, the above method is characterized in that the second node is user equipment.

According to one aspect of the present application, the above method is characterized in that the second node is a relay node.

The present application discloses a device used in a first node for wireless communication, comprising:

a first receiver receiving first signaling; and receiving a first reference signal in a first reference signal resource; and
a first transmitter sending first channel information, wherein the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by a recipient on the basis of the received first type is unknown to the first node;

- a generator for generating the first type is obtained on the basis of training; and
- the first type does not belong to CSI which is defined by 3GPP Rel-17 or a previous version of 3GPP Rel-17.

The present application discloses a device used in a second node for wireless communication, comprising:

a second transmitter sending first signaling; and sending a first reference signal in a first reference signal resource; and
a second receiver receiving first channel information, wherein the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by the second node on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

As one embodiment, compared with the traditional solution, the present application has the following advantages, which are advantageous but not limited to:

flexibly and reasonably allocating the occupation time of a processing unit according to requirements, thereby avoiding the waste of the processing capability while meeting the requirements of CSI reporting for the processing capability;
reasonably allocating the occupation time of the processing unit for different requirements of a CSI reporting generator applicable to different wireless channels for the processing capability; and
configuring different processing unit occupation time to respectively meet different processing capability requirements, thereby optimizing the system design.

## Brief Description of the Drawings

Other features, purposes and advantages of the present application will become more apparent from reading the detailed description of the non-limiting embodiments made with reference to the following drawings:

FIG. 1 shows a flowchart of a first node according to one embodiment of the present application;

FIG. 2 shows a schematic diagram of a network architecture according to one embodiment of the present application;

FIG. 3 shows a schematic diagram of an embodiment of a radio protocol architecture for a user plane and a control plane according to one embodiment of the present application;

FIG. 4 shows a schematic diagram of a first communication device and a second communication device according to one embodiment of the present application;

FIG. 5 shows a flowchart of a transmission between a first node and a second node according to one embodiment of the present application;

FIG. 6 shows a schematic diagram of Y symbols according to one embodiment of the present application;

FIG. 7 shows a schematic diagram of a relationship among a value of Y, a first integer and a second integer according to one embodiment of the present application;

FIG. 8 shows a first schematic diagram of a relationship between a value of Y and a target type set according to one embodiment of the present application;

FIG. 9 shows a second schematic diagram of a relationship between a value of Y and a target type set according to one embodiment of the present application;

FIG. 10 shows a schematic diagram of a value of Y being related to a quantity of processing units which are supported by a first node according to one embodiment of the present application;

FIG. 11 shows a schematic diagram of a value of Y being related to a quantity of unoccupied processing units which are supported by a first node according to one embodiment of the present application;

FIG. 12 shows a schematic diagram of a relationship between a value of Y and a subcarrier spacing according to one embodiment of the present application;

FIG. 13 shows a structural block diagram of a processing apparatus used in a first node according to one embodiment of the present application; and

FIG. 14 shows a structural block diagram of a processing apparatus used in a second node according to one embodiment of the present application.

## Detailed Description of Embodiments

The technical solution of the present application will be further described in detail below in conjunction with the drawings. It should be noted that, in case of no conflict, embodiments and features in the embodiments in the present application may be arbitrarily combined with each other.

## Embodiment 1

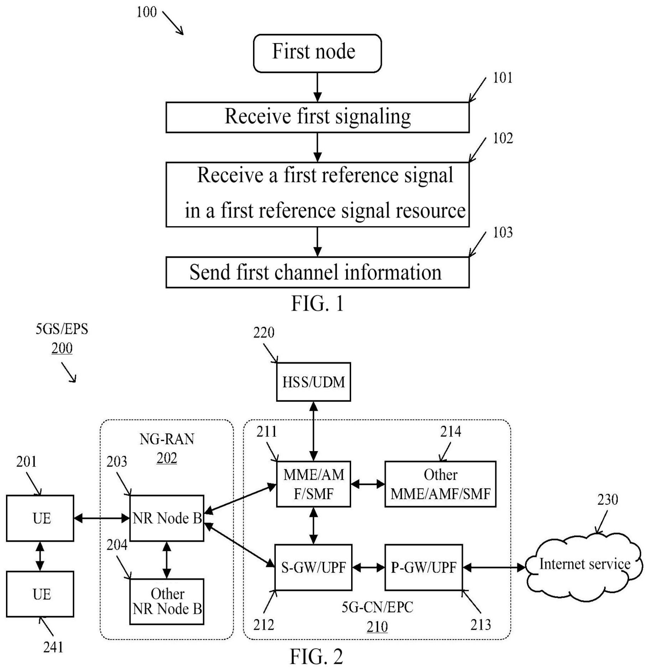

Embodiment 1 illustrates a flowchart of a first node according to one embodiment of the present application, as shown in FIG. 1. In FIG. 1, each block represents one step. In particular, the order of steps in the blocks does not represent a specific time sequence relation among the steps.

A first node receives first signaling in step 101; receives a first reference signal in a first reference signal resource in step 102; and sends first channel information in step 103.

In Embodiment 1, the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by a recipient on the basis of the received first type is unknown to the first node;
- a generator for generating the first type is obtained on the basis of training; and
- the first type does not belong to CSI which is defined by 3GPP Rel-17 or a previous version of 3GPP Rel-17.

As one embodiment, the CSI refers to: Channel State Information.

As one embodiment, the first signaling comprises dynamic signaling.

As one embodiment, the first signaling comprises physical layer signaling.

As one embodiment, the first signaling comprises signaling of a Layer 1 (L1).

As one embodiment, the first signaling is borne by physical layer signaling.

As one embodiment, the first signaling comprises all or part of fields of one piece of DCI (Downlink Control Information).

As one embodiment, the first signaling is one piece of DCI.

As one embodiment, the first signaling is DCI of one UpLink grant (UL).

As one embodiment, a DCI format used by the first signaling comprises format 0_1.

As one embodiment, a DCI format used by the first signaling comprises format 0_2.

As one embodiment, a DCI format used by the first signaling comprises one of format 0_1 and format 0_2.

As one embodiment, a DCI format used by the first signaling is one DCI format other than format 0_1 and format 0_2.

As one embodiment, CRC (Cyclic Redundancy Check) comprised in the first signaling is scrambled by an RNTI other than a C-RNTI (Cell-Radio Network Temporary Identity).

As one sub-embodiment of this embodiment, the name of an RNTI other than the C-RNTI comprises AI.

As one sub-embodiment of this embodiment, the name of an RNTI other than the C-RNTI comprises ML.

As one sub-embodiment of this embodiment, the value of an RNTI used for scrambling CRC comprised in the first signaling is fixed.

As one sub-embodiment of this embodiment, the value of an RNTI used for scrambling CRC comprised in the first signaling is configured through RRC (Radio Resource Control) signaling.

As one embodiment, the first signaling comprises MAC (Medium Access Control) sublayer signaling.

As one embodiment, the first signaling comprises an MAC CE (Control Element).

As one embodiment, the first signaling comprises an Aperiodic CSI Trigger State Subselection MAC CE.

As one embodiment, the first signaling comprises physical layer signaling and MAC layer signaling.

As one embodiment, the first reference signal resource occupies at least one RE (Resource Element).

Typically, one RE occupies one symbol in time domain, and occupies one subcarrier in frequency domain.

As one embodiment, the symbol in the present application is an OFDM (Orthogonal Frequency Division Multiplexing) symbol.

As one embodiment, the symbol in the present application is an SC-FDMA (Single Carrier-Frequency Division Multiple Access) symbol.

As one embodiment, the symbol in the present application is an IFDMA (Interleaved Frequency Division Multiple Access) symbol.

As one embodiment, the symbol in the present application is an FBMC (Filter Bank Multi Carrier) symbol.

As one embodiment, the symbol in the present application carries a CP (Cyclic Prefix).

As one embodiment, the symbol in the present application is an OFDM symbol comprising a CP.

As one embodiment, the symbol in the present application is a DFT-S-OFDM (Discrete Fourier Transform Spread OFDM) symbol comprising a CP.

As one embodiment, the symbol in the present application is obtained after an output of transform precoding undergoes the OFDM symbol generation.

As one embodiment, the first resource signal resource comprises at least one symbol in one slot in time domain.

As one embodiment, the first reference signal resource comprises a plurality of symbols in one slot in time domain.

As one embodiment, the first reference signal resource comprises a plurality of slots in time domain.

As one embodiment, the first reference signal resource comprises a plurality of subframes in time domain.

As one embodiment, the first reference signal resource comprises at least one sub-band in frequency domain.

As one embodiment, the first reference signal resource comprises at least one RB (Resource Block) in frequency domain.

As one embodiment, the first reference signal resource comprises a group of downlink PRBs (Physical RBs).

As one embodiment, the RB in the present application comprises a PRB.

As one embodiment, the RB in the present application refers to a PRB.

As one embodiment, the RB in the present application comprises 12 consecutive subcarriers on the frequency domain.

As one embodiment, the first reference signal resource comprises a CSI-RS (CSI-Reference Signal) resource.

As one embodiment, the first reference signal resource is one CSI-RS resource.

As one embodiment, the first reference signal resource is one CSI-RS resource set.

As one embodiment, the first reference signal resource is one NZP (Non-Zero-Power) CSI-RS resource.

As one embodiment, the first reference signal resource is one NZP CSI-RS resource set.

As one embodiment, the first reference signal resource is associated with 1 NZP-CSI-RS-ResourceId.

As one embodiment, the first reference signal resource is associated with 1 NZP-CSI-RS-Resource-Set.

As one embodiment, the first reference signal resource is associated with 1 NZP-CSI-RS-Resource-SetId.

As one embodiment, the first reference signal resource comprises an SSB.

As one embodiment, the first reference signal resource is one SSB resource.

As one embodiment, the SSB in the present application refers to: SS/PBCH block.

As one embodiment, the SSB in the present application refers to: Synchronization Signal/Physical Broadcast Channel Block.

As one embodiment, the first reference signal resource is associated with 1 SSB-Index.

As one embodiment, the first reference signal resource is associated with 1 CSI-ReportConfigId.

As one embodiment, the first reference signal resource is associated with 1 CSI-ResourceConfigId.

As one embodiment, the first reference signal resource comprises one or more ports.

As one sub-embodiment of the above embodiment, the one or more ports comprised in the first reference signal resource are respectively CSI-RS ports.

As one sub-embodiment of the above embodiment, the one or more ports comprised in the first reference signal resource are respectively antenna ports.

As one embodiment, the first reference signal resource comprises a reference signal.

As one embodiment, the first reference signal resource comprises a reference signal transmitted in the first reference signal resource.

As one embodiment, the first reference signal comprises a downlink reference signal.

As one embodiment, the first reference signal comprises a CSI-RS.

As one embodiment, the first reference signal comprises an SSB.

As one embodiment, the first reference signal comprises a PTRS (Phase-Tracking Reference Signal).

As one embodiment, the first reference signal comprises a DMRS (DeModulation Reference Signal).

As one embodiment, the first reference signal comprises a TRS (Tracking Reference Signal).

As one embodiment, the meaning of receiving a first reference signal on a first reference signal resource comprises: receiving the first reference signal in REs (Resource Elements) corresponding to the first reference signal resource.

As one embodiment, the meaning of receiving a first reference signal on a first reference signal resource comprises: receiving the first reference signal according to QCL parameters configured to the first reference signal resource.

As one embodiment, the types of the QCL parameters comprise a TypeA, a TypeB, a TypeC and a TypeD.

As one embodiment, the QCL parameters of the TypeA comprise Doppler shift, Doppler spread, average delay, and delay spread; the QCL parameters of the TypeB comprise Doppler shift and Doppler spread; the QCL parameters of the TypeC comprise Doppler shift and average delay; and the QCL parameters of the TypeD comprise a spatial reception parameter.

As one embodiment, the specific definitions of the TypeA, the TypeB, the TypeC and the TypeD refer to Chapter 5.1.5 of 3GPP TS38.214.

As one embodiment, the first signaling is used for configuring the first reference signal resource.

As one embodiment, the first signaling is used for determining a time domain resource which is occupied by the first reference signal resource.

As one embodiment, the first signaling is used for determining a frequency domain resource which is occupied by the first reference signal resource.

As one embodiment, the first signaling is used for configuring the first reference signal resource.

As one embodiment, the first signaling is used for determining a resourceSetId corresponding to the first reference signal resource.

As one embodiment, the first signaling is used for determining a CSI-ResourceConfigId corresponding to the first reference signal resource.

As one embodiment, the first signaling is used for determining a CSI-RS-ResourceSetId corresponding to the first reference signal resource.

As one embodiment, the first signaling is used for determining a CSI-RS-ResourceId corresponding to the first reference signal resource.

As one embodiment, the first signaling is used for determining an NZP-CSI-RS-ResourceSetId corresponding to the first reference signal resource.

As one embodiment, the first signaling is used for determining an NZP-CSI-RS-ResourceId corresponding to the first reference signal resource.

As one embodiment, in response to receiving the first signaling, the first node receives the first reference signal on the first reference signal resource.

As one embodiment, the first signaling is used for determining a period in which the first reference signal occurs in time domain.

As one embodiment, the first channel information comprises a baseband signal.

As one embodiment, the first channel information comprises a radio frequency signal.

As one embodiment, the first channel information comprises a wireless signal.

As one embodiment, the first channel information comprises CSI.

As one embodiment, the first channel information comprises a measurement report.

As one embodiment, the first channel information comprises a result of cell selection.

As one embodiment, the first channel information comprises a result of BFR (Beam Failure Recovery).

As one embodiment, the first channel information comprises reporting for a mobility measurement.

As one embodiment, the first channel information comprises CSI corresponding to one or more CSI types.

As one embodiment, the first channel information comprises CSI reporting corresponding to one or more CSI types.

As one embodiment, a CSI type set corresponding to the first channel information is indicated by the first signaling.

As one embodiment, the first node determines a CSI type set corresponding to the first channel information autonomously.

As one sub-embodiment of the above two embodiments, the CSI type set corresponding to the first channel information comprises one or more CSI types.

As one embodiment, the first channel information comprises Semi-Persistent (SP) CSI.

As one embodiment, the first channel information comprises APeriodic (AP) CSI.

As one embodiment, the first signaling is used for triggering sending of the first channel information.

As one embodiment, in response to receiving the first signaling, the first node sends the first channel information.

As one embodiment, the first signaling is used for indicating a trigger state of the first channel information.

As one embodiment, the first signaling comprises a first field, and the first field comprised in the first signaling is used for triggering sending of the first channel information.

As one sub-embodiment of the above embodiment, the first field comprised in the first signaling is a CSI Request field.

As one sub-embodiment of the above embodiment, the first field of the target signaling indicates a trigger state of a CSI-ReportConfig corresponding to the first channel information.

As one embodiment, the first signaling is used for determining a reportConfigId corresponding to the first channel information.

As one embodiment, the first signaling is used for determining a CSI-ReportConfigId corresponding to the first channel information.

As one embodiment, the first signaling comprises a first field, and the first field comprised in the first signaling is used for triggering sending of the first channel information.

As one sub-embodiment of this embodiment, the first field comprised in the first signaling is a CSI Request field.

As one embodiment, the first signaling is used for determining a time domain resource which is occupied by the first channel information.

As one embodiment, the first signaling is used for determining a time domain resource which is occupied by a physical layer channel for bearing the first channel information.

As one embodiment, the first signaling comprises a second field, and the second field of the target signaling is used for determining a time domain resource which is occupied by the first channel information.

As one sub-embodiment of this embodiment, the second field of the first signaling comprises a DCI field time domain resource allocation.

As one sub-embodiment of this embodiment, the second field of the first signaling is used for determining a time domain resource which is occupied by a physical layer channel for bearing the first channel information.

As one sub-embodiment of this embodiment, the second field of the first signaling is used for determining a slot which is occupied by the first channel information.

As one sub-embodiment of this embodiment, the second field of the first signaling is used for determining a slot which is occupied by a physical layer channel for bearing the first channel information.

As one embodiment, an RNTI for scrambling the CRC comprised in the first signaling is used for determining the type of the first channel information.

As one embodiment, the first signaling is used for triggering one piece of APeriodic (AP) CSI reporting.

As one embodiment, the first signaling is used for triggering one piece of Semi-Persistent CSI reporting.

As one embodiment, the first reference signal resource is a periodic CSI-RS resource; and the first channel information is Semi-Persistent CSI reporting.

As one embodiment, the first reference signal resource is a periodic CSI-RS resource, and the first channel information is AP CSI reporting.

As one embodiment, the first reference signal resource is a Semi-Persistent CSI-RS resource, and the first channel information is Semi-Persistent CSI reporting.

As one embodiment, the first reference signal resource is a Semi-Persistent CSI-RS resource, and the first channel information is AP CSI reporting.

As one embodiment, the first reference signal resource is an AP CSI-RS resource, and the first channel information is AP CSI reporting.

As one sub-embodiment of the above embodiment, the first signaling is used for determining a time domain resource which is occupied by the first reference signal resource.

As one embodiment, the measurement for the first reference signal comprises a channel measurement.

As one embodiment, the measurement for the first reference signal comprises an interference measurement (IM).

As one embodiment, the measurement for the first reference signal comprises a Layer 1 (L1) measurement.

As one embodiment, the measurement for the first reference signal comprises a Layer 3 (L3) measurement.

As one embodiment, the measurement for the first reference signal is used for generating CSI.

As one embodiment, the measurement for the first reference signal is used for generating a measurement report.

As one embodiment, the Y is a positive integer greater than 1.

As one embodiment, the first symbol carrying first channel information is one uplink symbol.

As one embodiment, the first type is one CSI type.

As one embodiment, the first type is one reporting type.

As one embodiment, the first type is one CSI calculation type.

As one embodiment, the first type is one CSI generation type.

As one embodiment, a name corresponding to the first type comprises AI.

As one embodiment, a name corresponding to the first type comprises ML.

As one embodiment, a name corresponding to the first type comprises AI-Index.

As one embodiment, a name corresponding to the first type comprises Training.

As one embodiment, a name corresponding to the first type comprises Model.

As one embodiment, the first channel information comprises the first type.

As one embodiment, the first channel information comprises CSI corresponding to the first type.

As one embodiment, the first channel information comprises CSI reporting corresponding to the first type.

As one embodiment, the first channel information comprises only the first type.

As one embodiment, the first channel information comprises only CSI corresponding to the first type.

As one embodiment, the first channel information comprises only CSI reporting corresponding to the first type.

As one embodiment, the first channel information comprises a CSI type other than the first type.

As one embodiment, the first channel information comprises CSI other than CSI corresponding to the first type.

As one embodiment, the first channel information comprises CSI reporting other than CSI reporting corresponding to the first type.

As one embodiment, the first channel information does not comprise the first type.

As one embodiment, the first channel information does not comprise CSI corresponding to the first type.

As one embodiment, the first channel information does not comprise CSI reporting corresponding to the first type.

As one embodiment, the first channel information comprises the first type, and the value of the Y depends on a first integer; the first channel information does not comprise the first type, and the value of the Y depends on a second integer; and the first integer is different from the second integer.

As one embodiment, the value of Y is related to whether a CSI type set corresponding to the first channel information comprises the first type.

As one embodiment, a CSI type set corresponding to the first channel information comprises the first type.

As one embodiment, a CSI type set corresponding to the first channel information comprises only the first type.

As one embodiment, a CSI type set corresponding to the first channel information comprises one CSI type other than the first type.

As one embodiment, a CSI type set corresponding to the first channel information does not comprise the first type.

As one embodiment, a CSI type set corresponding to the first channel information comprises the first type, and the value of the Y depends on a first integer; a CSI type set corresponding to the first channel information does not comprise the first type, and the value of the Y depends on a second integer; and the first integer is different from the second integer.

As one embodiment, the first signaling is used for determining the value of the Y.

As one sub-embodiment of this embodiment, the first signaling is used for determining a CSI type set corresponding to the first channel information, and the CSI type set corresponding to the first channel information is used for determining the value of the Y.

As one subsidiary embodiment of this sub-embodiment, whether the CSI type set corresponding to the first channel information comprises the first type is used for determining the value of the Y.

As one embodiment, the first type meets that channel information which is recovered by a recipient on the basis of the received first type is unknown to the first node.

As one embodiment, the first type meets that a generator for generating the first type is obtained on the basis of training.

As one embodiment, the first type meets that the first type does not belong to CSI which is defined by 3GPP Rel-17 or a previous version of 3GPP Rel-17.

As one embodiment, the first type meets that the generation of CSI corresponding to the first type is on the basis of artificial intelligence/maximum likelihood.

As one embodiment, the first type meets that the generation of CSI corresponding to the first type is on the basis of prediction.

As one embodiment, the first type meets that the generation of CSI corresponding to the first type is on the basis of model training.

As one embodiment, the first type meets that the generation of CSI corresponding to the first type comprises channel information compression.

## Embodiment 2

Embodiment 2 illustrates a schematic diagram of a network architecture according to one embodiment of the present application, as shown in FIG. 2.

FIG. 2 illustrates a network architecture of LTE (Long-Term Evolution), LTE-A (Long-Term Evolution Advanced), and future 5G systems. The network architecture of the LTE, LTE-A, and future 5G systems is referred to as an EPS (Evolved Packet System). The 5G NR or LTE network architecture may be referred to as a 5GS (5G System)/EPS 200 or some other suitable terminologies. The 5GS/EPS 200 may comprise one or more pieces of UE 201, one piece of UE 241 performing sidelink communication with the UE 201, an NG-RAN (Next Generation Radio Access Network) 202, a 5G-CN (5G Core Network)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides a packet switching service, but those skilled in the art will readily appreciate that various concepts presented throughout the present application may be extended to networks providing a circuit switching service. The NG-RAN 202 comprises an NR Node B (gNB) 203 and other gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB 203 provides an access point to the 5G-CN/EPC 210 for the UE 201. Examples of the UE 201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband Internet of Things device, a machine type communication device, a land vehicle, a car, a wearable device, or any other similar functional apparatuses. Those skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB 203 is connected to the 5G-CN/EPC 210 through an S1/NG interface. The 5G-CN/EPC 210 comprises an MME (Mobility Management Entity)/AMF (Authentication Management Field)/SMF (Session Management Function) 211, other MME/AMF/SMF 214, an S-GW (Service Gateway)/UPF (User Plane Function) 212, and a P-GW (Packet Data Network Gateway)/UPF 213. The MME/AMF/SMF 211 is a control node that handles signaling between the UE 201 and the 5G-CN/EPC 210. Generally, the MME/AMF/SMF 211 provides bearer and connection management. All user IP (Internet Protocol) packets are transmitted through the S-GW/UPF 212, and the S-GW/UPF 212 is itself connected to the P-GW/UPF 213. The P-GW provides UE IP address allocation and other functions. The P-GW/UPF 213 is connected to the Internet service 230. The Internet service 230 comprises operator-corresponding Internet protocol services, which may specifically comprise the Internet, an intranet, an IMS (IP Multimedia Subsystem), and a packet switching service.

As one embodiment, the first node in the present application comprises the UE 201.

As one embodiment, the second node in the present application comprises the gNB 203.

As one embodiment, the UE 201 supports a relay transmission.

As one embodiment, the UE 201 comprises a mobile phone.

As one embodiment, the UE 201 is a means of transportation comprising a car.

As one embodiment, the gNB 203 is a Macro Cell base station.

As one embodiment, the gNB 203 is a Micro Cell base station.

As one embodiment, the gNB 203 is a Pico Cell base station.

As one embodiment, the gNB 203 is a Femtocell.

As one embodiment, the gNB 203 is a base station device supporting a large-latency difference.

As one embodiment, the gNB 203 is one flying platform device.

As one embodiment, the gNB 203 is a satellite device.

As one embodiment, the gNB 203 is a test device (such as a transceiving apparatus that simulates some functions of a base station, and a signaling tester).

As one embodiment, a radio link from the UE 201 to the gNB 203 is an uplink, the uplink being used for executing an uplink transmission.

As one embodiment, a radio link from the gNB 203 to the UE 201 is a downlink, the downlink being used for executing a downlink transmission.

As one embodiment, a radio link between the UE 201 and the gNB 203 comprises a cellular network link.

As one embodiment, the UE 201 and the gNB 203 are connected through a Uu air interface.

As one embodiment, a sender of the first signaling comprises the gNB 203.

As one embodiment, a recipient of the first signaling comprises the UE 201.

As one embodiment, a sender of the first reference signal comprises the gNB 203.

As one embodiment, a recipient of the first reference signal comprises the UE 201.

As one embodiment, a sender of the first channel information comprises the UE 201.

As one embodiment, a recipient of the first channel information comprises the gNB 203.

As one embodiment, the UE 201 supports generating reporting using AI/ML.

As one embodiment, the UE 201 supports generating a trained model or some parameters in a model using training data.

As one embodiment, the UE 201 supports determining at least some parameters for CSI feedback enhancement through training.

As one embodiment, the UE 201 supports CSI feedback enhancement based on AI/ML.

As one embodiment, the UE 201 supports CSI feedback enhancement based on neural networks.

As one embodiment, the UE 201 supports CSI feedback enhancement based on CNNs (Convolutional Neural Networks).

As one embodiment, the UE 201 supports CSI feedback enhancement based on a Transformer.

As one embodiment, the UE 201 supports CSI feedback enhancement based on a ResNet (Residual Network).

## Embodiment 3

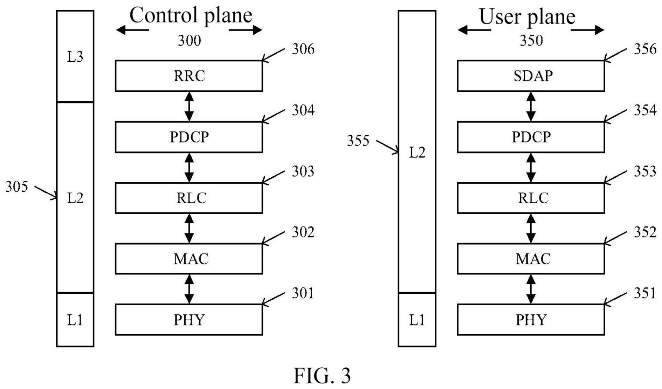

Embodiment 3 illustrates a schematic diagram of an embodiment of a radio protocol architecture for a user plane and a control plane according to one embodiment of the present application, as shown in FIG. 3.

FIG. 3 is a schematic diagram illustrating an embodiment of a radio protocol architecture for a user plane 350 and a control plane 300. FIG. 3 shows a radio protocol architecture for the control plane 300 between a first communication node device (UE or an RSU (Road Side Unit) in V2X (Vehicle to Everything), a vehicle-mounted device or a vehicle-mounted communication module) and a second node device (gNB, UE or an RSU in V2X, a vehicle-mounted device or a vehicle-mounted communication module), or between two pieces of UE using three layers: a Layer 1 (L1), a Layer 2 (L2), and a Layer 3 (L3). The L1 is the lowest layer and implements various PHY (Physical Layer) signal processing functions. The L1 will be referred to as PHY 301 herein. The L2 305 is above the PHY 301 and is responsible for links between a first node device and a second node device or between two pieces of UE through the PHY 301. The L2 305 comprises an MAC sublayer 302, an RLC (Radio Link Control) sublayer 303, and a PDCP (Packet Data Convergence Protocol) sublayer 304, which terminate at a second node device. The PDCP sublayer 304 provides multiplexing between different radio bearers and logical channels. The PDCP sublayer 304 also provides security by encrypting data packets and provides handover support for the first communication node device between second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transmission channels. The MAC sublayer 302 is also responsible for allocating various radio resources (e.g., resource blocks) in one cell between first communication node devices. The MAC sublayer 302 is also responsible for HARQ operations. An RRC sublayer 306 in the L3 in the control plane 300 is responsible for obtaining radio resources (i.e., radio bearers) and configuring lower layers using RRC signaling between the second communication node device and the first communication node device. The radio protocol architecture for the user plane 350 comprises a Layer 1 (L1) and a Layer 2 (L2). The radio protocol architecture for the first communication node device and the second communication node device in the user plane 350 is substantially the same as the corresponding layers and sublayers in the control plane 300 as for a physical layer 351, a PDCP sublayer 354 in L2 355, an RLC sublayer 353 in the L2 355, and a MAC sublayer 352 in the L2 355, but the PDCP sublayer 354 also provides header compression for upper-layer data packets to reduce the radio transmission overhead. The L2 355 in the user plane 350 also comprises an SDAP (Service Data Adaptation Protocol) sublayer 356, and the SDAP sublayer 356 is responsible for mapping between a QoS (Quality of Service) flow and a data radio bearer (DRB) to support the diversity of services. Although not shown, the first communication node device may have several upper layers above the L2 355, comprising a network layer (e.g., IP layer) terminating at the P-GW on the network side and an application layer terminating at the other end (e.g., remote UE, servers, etc.) of a connection.

As one embodiment, the radio protocol architecture in FIG. 3 is applicable to a first node in the present application.

As one embodiment, the radio protocol architecture in FIG. 3 is applicable to a second node in the present application.

As one embodiment, the first signaling is generated at the PHY 301.

As one embodiment, the first signaling is generated at the MAC sublayer 302 or MAC sublayer 352.

As one embodiment, the higher layer in the present application refers to a layer above a physical layer.

As one embodiment, the higher layer in the present application comprises an MAC layer.

As one embodiment, the higher layer in the present application comprises an RRC layer.

## Embodiment 4

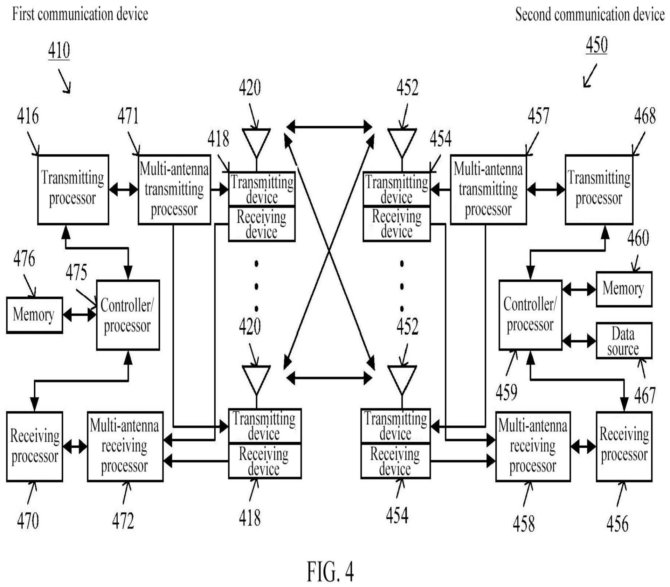

Embodiment 4 illustrates a schematic diagram of a first communication device and a second communication device according to one embodiment of the present application, as shown in FIG. 4. Figure 4 is a block diagram of a first communication device 410 and a second communication device 450 communicating with each other in an access network.

The first communication device 410 comprises a controller/processor 475, a memory 476 , a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper-layer data packets from a core network are provided to the controller/processor 475. The controller/processor 475 implements functionality of the L2. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 (i.e., physical layer). The transmitting processor 416 implements coding and interlacing to facilitate forward error correction (FEC) at the second communication device 450, as well as mapping of signal constellations based on various modulation schemes (e.g., binary phase shift keying (BPSK), quadrature phase shift keying (QPSK), M-ary phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes a modulated symbol with a reference signal (e.g., pilot) in a time domain and/or frequency domain, and then uses inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides it to a different antenna 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier and converts the radio frequency stream into a baseband multi-carrier symbol stream and provides it to the receiving processor 456. The receiving processor 456 and the multi-antenna receiving processor 458 implement various signal processing functions of the L1. The multi-antenna receiving processor 458 performs a receiving analog precoding/beamforming operation on the baseband multi-carrier symbol stream from the receiving device 454. The receiving processor 456 uses fast Fourier transform (FFT) to convert the baseband multi-carrier symbol stream after the receiving analog precoding/beamforming operation from a time domain to a frequency domain. In the frequency domain, a data signal and a reference signal of a physical layer are demultiplexed by the receiving processor 456, wherein the reference signal will be used for a channel estimation, and the data signal is recovered after undergoing multi-antenna detection in the multi-antenna receiving processor 458 into any parallel stream destined for the second communication device 450. Symbols on each parallel stream are demodulated and recovered in the receiving processor 456, and soft decisions are generated. The receiving processor 456 then decodes and deinterlaces the soft decisions to recover upper-layer data and control signals transmitted by the first communication device 410 on the physical channel. The upper-layer data and the control signals are then provided to the controller/processor 459. The controller/processor 459 implements functions of the L2. The controller/processor 459 may be associated with the memory 460 storing program codes and data. The memory 460 may be referred to as a computer-readable medium. In the DL, the controller/processor 459 provides demultiplexing between transmission and logical channels, packet reassembly, decryption, header decompression, and control signal processing to recover upper-layer data packets from the core network. The upper-layer data packets are then provided to all protocol layers above the L2. Various control signals may also be provided to the L3 for L3 processing. The controller/processor 459 is also responsible for error detection using an Acknowledgement (ACK) and/or Negative Acknowledgement (NACK) protocol to support the HARQ operations.

In a transmission from the second communication device 450 to the first communication device 410, at the second communication device 450, the data source 467 is used to provide upper-layer data packets to the controller/processor 459. The data source 467 represents all protocol layers above the L2. Similar to a sending function at the first communication device 410 described in the DL, the controller/processor 459 implements header compression, encryption, packet segmentation and reordering, and multiplexing between logical and transmission channels based on radio resource allocation of the first communication device 410, and implements L2 functions for the user plane and the control plane. The controller/processor 459 is also responsible for HARQ operations, retransmission of lost packets, and signaling to the first communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then the transmitting processor 468 modulates a generated parallel stream into a multi-carrier/single-carrier symbol stream, which is provided to a different antenna 452 via the transmitting device 454 after undergoing analog precoding/beamforming operations in the multi-antenna transmitting processor 457. Each transmitting device 454 first converts a baseband symbol stream provided by the multi-antenna transmitting processor 457 into a radio frequency symbol stream, and then provides it to the antenna 452.

In the transmission from the second communication device 450 to the first communication device 410, functions at the first communication device 410 are similar to receiving functions at the second communication device 450 described in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1. The controller/processor 475 implements functions of the L2. The controller/processor 475 may be associated with the memory 476 storing program codes and data. The memory 476 may be referred to as a computer-readable medium. The controller/processor 475 provides demultiplexing between transmission and logical channels, packet reassembly, decryption, header decompression, and control signal processing to recover upper-layer data packets from the second communication device 450. The upper-layer data packets from the controller/processor 475 may be provided to the core network. The controller/processor 475 is also responsible for error detection using an ACK and/or NACK protocol to support the HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least receives first signaling; receives a first reference signal in a first reference signal resource; and sends first channel information; the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by a recipient on the basis of the received first type is unknown to the second communication device 450;
- a generator for generating the first type is obtained on the basis of training; and
- the first type does not belong to CSI which is defined by 3GPP Rel-17 or a previous version of 3GPP Rel-17.

As one embodiment, the second communication device 450 comprises: a memory storing a computer-readable instruction program, the computer-readable instruction program generating actions when executed by at least one processor, and the actions comprising: receiving first signaling; receiving a first reference signal in a first reference signal resource; and sending first channel information.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least sends first signaling; sends a first reference signal in a first reference signal resource; and receives first channel information; the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by the first communication device 410 on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

As one embodiment, the first communication device 410 comprises: a memory storing a computer-readable instruction program, the computer-readable instruction program generating actions when executed by at least one processor, and the actions comprising:

sending first signaling; sending a first reference signal in a first reference signal resource; and receiving first channel information.

As one embodiment, the first node in the present application comprises the second communication device 450.

As one embodiment, the second node in the present application comprises the first communication device 410.

As one embodiment, at least one of {the antenna 420, the transmitting device 418, the transmitting processor 416, the multi-antenna transmitting processor 471, the controller/processor 475, and the memory 476} is used for sending the first signaling; and at least one of {the antenna 452, the receiving device 454, the receiving processor 456, the multi-antenna receiving processor 458, the controller/processor 459, the memory 460, and the data source 467} is used for receiving the first signaling.

As one embodiment, at least one of {the antenna 420, the transmitting device 418, the transmitting processor 416, the multi-antenna transmitting processor 471, the controller/processor 475, and the memory 476} is used for sending the first reference signal in the first reference signal resource; and at least one of {the antenna 452, the receiving device 454, the receiving processor 456, the multi-antenna receiving processor 458, the controller/processor 459, the memory 460, and the data source 467} is used for receiving the first reference signal in the first reference signal resource.

As one embodiment, at least one of {the antenna 452, the transmitting device 454, the transmitting processor 468, the multi-antenna transmitting processor 457, the controller/processor 459, the memory 460, and the data source 467} is used for sending the first channel information; and at least one of {the antenna 420, the receiving device 418, the receiving processor 470, the multi-antenna receiving processor 472, the controller/-processor 475, and the memory 476} is used for receiving the first channel information.

**Embodiment 5**

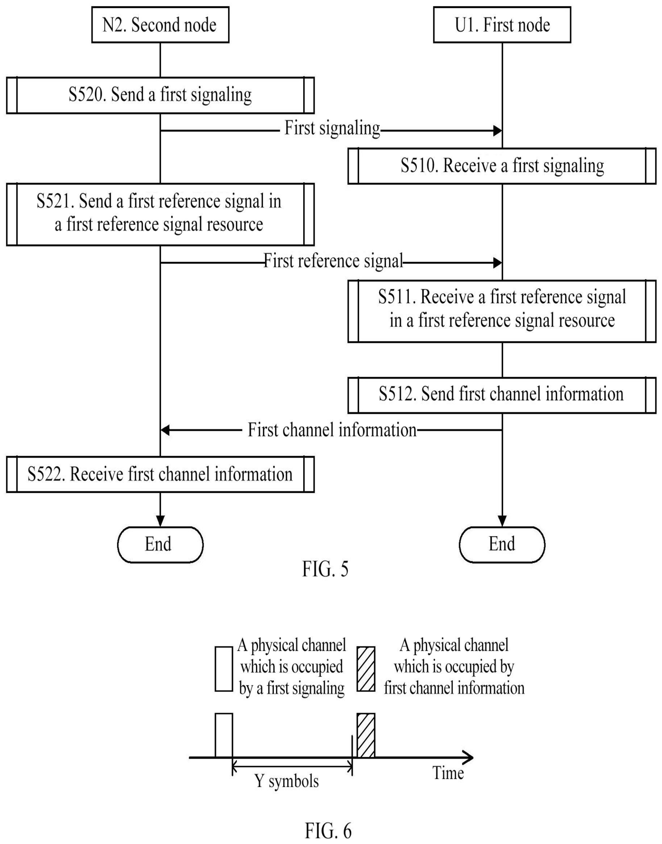

Embodiment 5 illustrates a flowchart of a transmission between a first node and a second node according to one embodiment of the present application. In FIG. 5, a first node U1 communicates with a second node N2 through a radio link. It should be particularly noted that the order in this embodiment does not limit the signal transmission order and implementation order in the present application.

For **the first node U1,** first signaling is received in step S510; a first reference signal is received in a first reference signal resource in step S511; and first channel information is sent in step S512.

For **the second node N2,** first signaling is sent in step S520; a first reference signal is sent in a first reference signal resource in step S521; and first channel information is received in step S522.

In Embodiment 5, the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by a recipient on the basis of the received first type is unknown to the first node;
- a generator for generating the first type is obtained on the basis of training; and
- the first type does not belong to CSI which is defined by 3GPP Rel-17 or a previous version of 3GPP Rel-17.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, the air interface between the second node N2 and the first node U1 comprises a wireless interface between a relay node device and user equipment.

As one embodiment, the air interface between the second node N2 and the first node U1 comprises a wireless interface between user equipment and user equipment.

As one embodiment, the first signaling is earlier than the first reference signal in time domain.

As one embodiment, the first signaling is later than the first reference signal in time domain.

As one embodiment, the first node first receives the first signaling, and then receives the first reference signal in the first reference signal resource.

As one embodiment, the first node first receives the first reference signal in the first reference signal resource, and then receives the first signaling.

As one embodiment, the first signaling is transmitted on a downlink physical control channel (i.e., a downlink channel which can only be used for bearing physical layer signaling).

As one embodiment, a physical layer channel which is occupied by the first signaling comprises a PDCCH (Physical Downlink Control Channel).

As one embodiment, the first channel information is transmitted on an uplink physical layer data channel (i.e., an uplink channel which can be used for bearing physical layer data).

As one embodiment, a physical layer channel which is occupied by the first channel information comprises a PUSCH (Physical Uplink Shared Channel).

As one embodiment, the first channel information is transmitted on an uplink physical layer control channel (i.e., an uplink channel which can be used for bearing physical layer signaling).

As one embodiment, a physical layer channel which is occupied by the first channel information comprises a PUCCH (Physical Uplink Control Channel).

## Embodiment 6

Embodiment 6 illustrates a schematic diagram of Y symbols according to one embodiment of the present application, as shown in FIG. 6. In FIG. 6, the horizontal axis represents time, unfilled squares represent physical channels which are occupied by the first signaling, squares filled with diagonal lines represent physical channels which are occupied by the first channel information, the starting of a first symbol which carries the first channel information is not earlier than a Y-th symbol after the last symbol which is occupied by the first signaling, and Y is a positive integer greater than 1.

As one embodiment, the starting of a first symbol which carries the first channel information is not earlier than a Y-th symbol after the last symbol which is occupied by the first signaling, and Y is a positive integer greater than 1.

As one embodiment, the first symbol which carries the first channel information is a starting symbol which is occupied in time domain by a physical layer channel which carries the first channel information.

As one embodiment, the first symbol which carries the first channel information is the first of symbols which are occupied in time domain by a physical layer channel which carries the first channel information.

As one embodiment, the first symbol which carries the first channel information is a first symbol which is occupied in time domain by a physical layer channel which carries the first channel information.

As one embodiment, the last symbol which is occupied by the first signaling is the last symbol which is occupied in time domain by a physical layer channel which is occupied by the first signaling.

As one embodiment, the last symbol which is occupied by the first signaling is the latest symbol which is occupied in time domain by a physical layer channel which is occupied by the first signaling.

As one embodiment, the last symbol which is occupied by the first signaling is an ending symbol which is occupied in time domain by a physical layer channel which is occupied by the first signaling.

As one embodiment, the meaning of the "after the last symbol which is occupied by the first signaling" is: being temporally later than the last symbol which is occupied by the first signaling.

As one embodiment, the meaning of the "after the last symbol which is occupied by the first signaling" is: being temporally not earlier than the last symbol which is occupied by the first signaling.

As one embodiment, the meaning of the "not earlier than" in the present application is: later than.

As one embodiment, the meaning of the "the starting of a first symbol which carries the first channel information is not earlier than a Y-th symbol after the last symbol which is occupied by the first signaling" comprises: the starting of a first symbol of a physical channel which is occupied by the first channel information is not earlier than a Y-th symbol after the last symbol of a physical channel which is occupied by the first information.

As one embodiment, the meaning of the "the starting of a first symbol which carries the first channel information is not earlier than a Y-th symbol after the last symbol which is occupied by the first signaling" comprises: the starting of a first symbol of a physical channel which is occupied by the first channel information is later than a Y-th symbol after the last symbol of a physical channel which is occupied by the first information.

## Embodiment 7

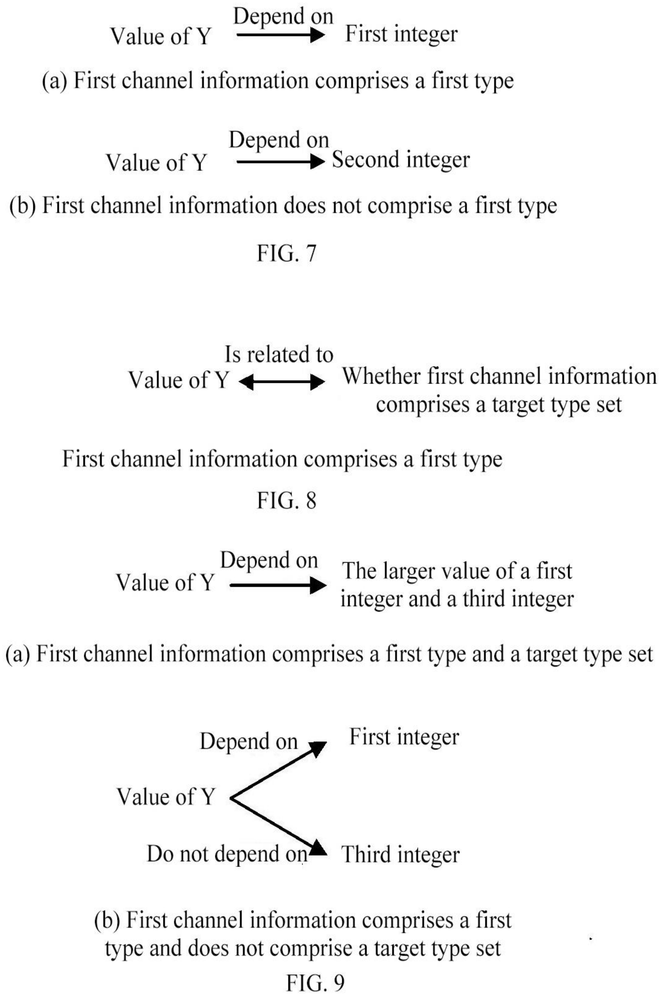

Embodiment 7 illustrates a schematic diagram of a relationship among a value of Y, a first integer and a second integer according to one embodiment of the present application, as shown in FIG. 7. In FIG. 7, Figure (a) represents that the first channel information comprises a first type, and the value of the Y depends on a first integer; in Figure (b), the first channel information does not comprise a first type, and the value of the Y depends on a second integer; and the first integer in Figure (a) is different from the second integer in Figure (b).

As one embodiment, the first channel information comprises the first type, and the value of the Y depends on the first integer; the first channel information does not comprise the first type, and the value of the Y depends on the second integer; the first integer is different from the second integer.

As one embodiment, the meaning of the value of the Y depending on a first integer comprises: the value of Y is equal to the first integer.

As one embodiment, the meaning of the value of the Y depending on a first integer comprises: the value of Y is linearly correlated with the first integer.

As one embodiment, the meaning of the value of the Y depending on a first integer comprises: the value of Y is equal to a positive integer multiple of the first integer.

As one embodiment, M first-type candidate values are used for determining the first integer, and the M is a positive integer.

As one sub-embodiment of this embodiment, any first-type candidate value among the M first-type candidate values is one positive integer.

As one sub-embodiment of this embodiment, the first integer is the largest first-type candidate value among the M first-type candidate values.

As one sub-embodiment of this embodiment, the first integer is the smallest first-type candidate value among the M first-type candidate values.

As one sub-embodiment of this embodiment, the M first-type candidate values are respectively associated with M CSI types, any CSI type among the M CSI types belongs to a first CSI type set, and any CSI type in the first CSI type set meets at least one of the following conditions:

- channel information which is recovered by a recipient on the basis of the received any CSI type is unknown to the first node in the present application;
- a generator for generating the any CSI type is obtained on the basis of training; and
- the any CSI type does not belong to CSI which is defined by 3GPP Rel-17 or a previous version of 3GPP Rel-17.

As one sub-embodiment of this embodiment, any first-type candidate value among the M first-type candidate values is related to a corresponding subcarrier spacing.

As one sub-embodiment of this embodiment, the M first-type candidate values respectively correspond to M CSI Reports, and the M is the maximum value between 0 and N that can meet a first condition.

As one subsidiary embodiment of this sub-embodiment, N corresponds to a quantity of CSI reports which are enabled by the first node in the same OFDM symbol and occupy unoccupied XPUs (X processing units).

As one subsidiary embodiment of this sub-embodiment, the first condition comprises:

$$\sum_{n=0}^{M-1} O_{XPU}^{(n)} \le N_{XPU} - L,$$

wherein n is one integer between 0 and M-1, $O_{XPU}^{(n)}$ represents $O_{XPU}^{(n)}$ corresponding to CSI Report n among M CSI Reports, $N_{XPU}$ represents a quantity of XPUs which are supported by UE for simultaneous CSI calculation in a CC (Component Carrier), and $L$ represent a quantity of XPUs which are occupied for CSI reporting calculation in the same OFDM symbol.

As one embodiment, the meaning of the value of the Y depending on a second integer comprises: the value of Y is equal to the second integer.

As one embodiment, the meaning of the value of the Y depending on a second integer comprises: the value of Y is linearly correlated with the second integer.

As one embodiment, the meaning of the value of the Y depending on a second integer comprises: the value of Y is equal to a positive integer multiple of the second integer.

As one embodiment, Q second-type candidate values are used for determining the second integer, and Q is a positive integer.

As one sub-embodiment of this embodiment, any second-type candidate value among the Q second-type candidate values is one positive integer.

As one sub-embodiment of this embodiment, the second integer is the largest second-type candidate value among the Q second-type candidate values.

As one sub-embodiment of this embodiment, the second integer is the smallest second-type candidate value among the Q second-type candidate values.

As one sub-embodiment of this embodiment, any second-type candidate value among the Q second-type candidate values is related to a corresponding subcarrier spacing.

As one sub-embodiment of this embodiment, the Q second-type candidate values are respectively associated with Q CSI types, any CSI type among the Q CSI types belongs to a second CSI type set, and any CSI type in the second CSI type set is a type other than the first type.

As one subsidiary embodiment of this sub-embodiment, any CSI type among the second CSI type set is a type corresponding to CSI which is defined by 3GPP Rel-17 or a previous version of 3GPP Rel-17.

As one sub-embodiment of this embodiment, the Q second-type candidate values respectively correspond to Q CSI Reports, and the Q is the maximum value between 0 and N1 that can meet a first condition.

As one subsidiary embodiment of this sub-embodiment, the N1 corresponds to a quantity of CSI reports which are enabled by the first node in the same OFDM symbol and occupy unoccupied CPUs (CSI Processing Units).

As one subsidiary embodiment of this sub-embodiment, the first condition comprises:

$$\sum_{n=0}^{Q-1} O_{CPU}^{(n)} \le N_{CPU} - L_1,$$

wherein n is one integer between 0 and Q-1, $O_{CPU}^{(n)}$ represents $O_{CPU}^{(n)}$ corresponding to CSI Report n among Q CSI Reports, $N_{CPU}$ represents a quantity of CPUs which are supported by UE for simultaneous CSI calculation in a CC, and $L_1$ represents the quantity of CPUs which are occupied for CSI reporting calculation in the same OFDM symbol.

As one embodiment, the XPU in the present application comprises a CPU.

As one embodiment, the XPU in the present application comprises a processing unit other than a CPU.

As one embodiment, the XPU in the present application comprises a GPU (General Processing Unit).

As one embodiment, the XPU in the present application comprises a GPU (Graphic Processing Unit).

As one embodiment, the XPU in the present application comprises a processing unit for AI calculation.

As one embodiment, the XPU in the present application comprises an APU (Accelerated Processing Unit).

As one embodiment, the second CSI type set is a combination of one or more CSI types, and the CSI type is at least one of L1-RSRP, a CRI (CSI-RS Resource Indicator), an RI (Rank Indicator), a PMI (Precoding Matrix Indicator), a CQI (Channel Quality Indicator), an LI (Layer Indicator), an SSB-Index, an SSBRI (SSB Resource Indicator), an SINR (Signal to Noise and Interference Ratio), an L1-SINR (Layer 1 SINR), a Capability Index, and a Capability Set Index.

## Embodiment 8

Embodiment 8 illustrates a first schematic diagram of a relationship between a value of Y and a target type set according to one embodiment of the present application, as shown in FIG. 8. In FIG. 8, the first channel information comprises the first type, the value of the Y is related to whether the first channel information also comprise a target type set, and the target type set comprises at least one CSI type; and candidates of the CSI type comprise at least one of an L1-RSRP, a CRI, an RI, a PMI, a CQI, and an LI.

As one embodiment, the L1-RSRP refers to: Layer 1 Reference Signal Received Power.

As one embodiment, the first channel information comprises the first type, the value of the Y is related to whether the first channel information further comprises a target type set, and the target type set comprises at least one CSI type; and candidates of the CSI type comprise at least one of an L1-RSRP, a CRI, an RI, a PMI, a CQI, and an LI.

As one embodiment, a CSI type set corresponding to the first channel information comprises the first type, the value of the Y is related to whether a CSI type set corresponding to the first channel information further comprises a CSI type in the target type set, and the target type set comprises at least one CSI type; and candidates of the CSI type comprise at least one of an L1-RSRP, a CRI, an RI, a PMI, a CQI, and an LI.

As one embodiment, the target type set comprises at least one of an L1-RSRP, a CRI, an RI, a PMI, a CQI, and an LI.

As one embodiment, the target type set comprises at least one of an SSB-Index, an SSBRI, an SINR, an L1-SINR, a Capability Index, and a Capability Set Index.

As one embodiment, the target type set comprises at least one of an L1-RSRP, a CRI, an RI, a PMI, a CQI, an LI, an SSB-Index, an SSBRI, an SINR, an L1-SINR, a Capability Index, and a Capability Set Index.

As one embodiment, any CSI type comprised in the target type set is a type corresponding to CSI which is defined by 3GPP Rel-17 or a previous version of 3GPP Rel-17.

As one embodiment, any CSI type in the target type set is a type other than the first type.

As one embodiment, the target type set corresponds to a scenario where $\mu$ corresponding to a subcarrier spacing of a PDCCH which is occupied by the first signaling, $\mu$ corresponding to a subcarrier spacing of the first reference signal, and $\mu$ corresponding to a subcarrier spacing of the first channel information are all not larger than 3.

As one embodiment, the target type set corresponding to reportQuantity is set to 'cri-RI-CQI'.

As one embodiment, the target type set corresponding to reportQuantity is set to an 'ssb-Index-SINR', a 'cri-SINR', an 'ssb-Index-SINR-Capability[Set]Index', or a 'cri-SINR-Capability[Set]Index'.

As one embodiment, the target type set corresponding to reportQuantity is set to a 'cri-RSRP', an 'ssb-Index-RSRP', a 'cri-RSRP-Capability[Set]Index', or an 'ssb-Index-RSRP-Capability[Set]Index'.

As one embodiment, the first channel information does not comprise the target type set.

As one embodiment, the first channel information comprises the first type and comprises the target type set.

As one embodiment, the first channel information comprises any CSI type in the target type set.

As one embodiment, the first channel information comprises one CSI type other than the first type, and the one CSI type other than the first type belongs to the target type set.

## Embodiment 9

Embodiment 9 illustrates a second schematic diagram of a relationship between a value of Y and a target type set according to one embodiment of the present application, as shown in FIG. 9. In FIG. 9, Figure (a) represents that the first channel information comprises the first type and the target type set, and the value of the Y depends on the larger value of the first integer and a third integer; Figure (b) represents that the first channel information comprises only the first type and does not comprise the target type set, and the value of the Y depends on the first integer and does not depend on the third integer; and the third integers in Figure (a) and Figure (b) are associated with the target type set.

As one embodiment, the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

As one embodiment, the meaning of the value of the Y depending on the larger one of the first integer and a third integer comprises: the value of Y is equal to the larger value of the first integer and the third integer.

As one embodiment, the meaning of the value of the Y depending on the larger of the first integer and the third integer comprises: the value of Y is linearly correlated with the larger value of the first integer and the third integer.

As one embodiment, the meaning of the value of the Y depending on the larger of the first integer and the third integer comprises: the value of Y is equal to a positive integer multiple of the larger value of the first integer and the third integer.

As one embodiment, P third-type candidate values are used for determining the third integer, and the P is a positive integer.

As one sub-embodiment of this embodiment, any third-type candidate value among the P third-type candidate values is one positive integer.

As one sub-embodiment of this embodiment, the third integer is the largest third-type candidate value among the P third-type candidate values.

As one sub-embodiment of this embodiment, the third integer is the smallest third-type candidate value among the P third-type candidate values.

As one sub-embodiment of this embodiment, the P third-type candidate values are respectively associated with P CSI types, any CSI type among the P CSI types belongs to the target type set, and any CSI type in the target type set belongs to CSI which is defined by 3GPP Rel-17 or a previous version of 3GPP Rel-17.

As one sub-embodiment of this embodiment, any third-type candidate value among the P third-type candidate values is related to a corresponding subcarrier spacing.

As one sub-embodiment of this embodiment, the P third-type candidate values respectively correspond to P CSI Reports, and the P is the maximum value between 0 and N1 that can meet a first condition.

As one subsidiary embodiment of this sub-embodiment, the N1 corresponds to a quantity of CSI reports which are enabled by the first node in the same OFDM symbol and occupy unoccupied CPUs.

As one subsidiary embodiment of this sub-embodiment, the first condition comprises:

$$\sum_{n=0}^{P-1} O_{CPU}^{(n)} \leq N_{CPU} - L_1$$ , wherein n is one integer between 0 and P-1, $O_{CPU}^{(n)}$ represents $O_{CPU}^{(n)}$ corresponding to CSI Report n among P CSI Reports, $N_{CPU}$ represents a quantity of CPUs which are supported by UE for simultaneous CSI calculation in one CC, and $L_1$ represents a quantity of CPUs which are occupied for CSI reporting calculation in the same OFDM symbol.

**Embodiment 10**

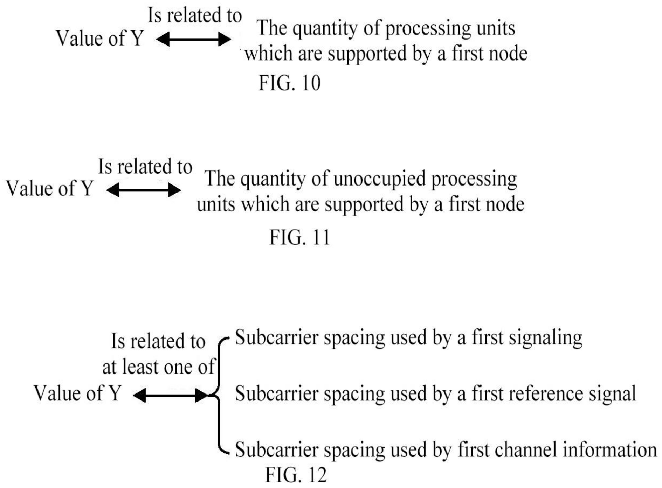

Embodiment 10 illustrates a schematic diagram of a value of Y being related to a quantity of processing units which are supported by a first node according to one embodiment of the present application, as shown in FIG. 10.

As one embodiment, the value of the Y is related to a quantity of processing units which are supported by the first node.

As one embodiment, a quantity of processing units which are occupied within the Y symbols is not greater than a quantity of processing units which are supported by the first node.

As one embodiment, a quantity of processing units which are supported by the first node that is related to the value of the Y is Per CC (Per Component Carrier).

As one embodiment, a quantity of processing units which are supported by the first node that is related to the value of the Y is counted Per CC.

As one embodiment, the processing unit is an XPU.

As one sub-embodiment of this embodiment, the XPU is a GPU.

As one sub-embodiment of this embodiment, the XPU is an APU.

As one embodiment, the processing unit is a processing unit other than a central processing unit.

As one embodiment, the processing unit other than the central processing unit is used for AI.

As one embodiment, the processing unit other than the central processing unit is used for CSI calculation.

As one embodiment, the processing unit other than the central processing unit is used for AI/ML-based CSI calculation.

As one embodiment, the processing unit other than the central processing unit is used for training-based CSI calculation.

As one embodiment, the processing unit other than the central processing unit is used for Module-based CSI calculation.

As one embodiment, a quantity of processing units which are supported by the first node that is related to the value of the Y refers to: a quantity of processing units which are supported by the first node for simultaneously performing AI-based CSI calculation.

As one embodiment, a quantity of processing units which are supported by the first node that is related to the value of the Y refers to: a quantity of processing units which can be used for AI-based CSI calculation among processing units which are supported by the first node for simultaneous CSI calculation.

**Embodiment 11**

Embodiment 11 illustrates a schematic diagram of a value of Y being related to a quantity of unoccupied processing units which are supported by a first node according to one embodiment of the present application, as shown in FIG. 11.

As one embodiment, the value of the Y is related to a quantity of unoccupied processing units which are supported by a first node.

As one embodiment, a quantity of processing units which are occupied within the Y symbols is not greater than a quantity of unoccupied processing units which are supported by the first node.

As one embodiment, the unoccupied processing unit refers to a processing unit which is not occupied by CSI calculation.

As one embodiment, the unoccupied processing unit refers to a processing unit which is not occupied by AI-based CSI calculation.

As one embodiment, the unoccupied processing unit refers to a processing unit which is not occupied by AI/ML-based CSI calculation.

As one embodiment, the unoccupied processing unit refers to a processing unit which is not occupied by training-based CSI calculation.

As one embodiment, the unoccupied processing unit refers to a processing unit which is not occupied by Module-based CSI calculation.

As one embodiment, the unoccupied processing unit refers to a processing unit which can be used for AI-based CSI calculation among processing units which are not occupied by CSI calculation.

As one embodiment, the unoccupied processing unit refers to a processing unit which can be used for AI/ML-based CSI calculation among processing units which are not occupied by CSI calculation.

As one embodiment, the unoccupied processing unit refers to a processing unit which can be used for training-based CSI calculation among processing units which are not occupied by CSI calculation.

As one embodiment, the unoccupied processing unit refers to a processing unit which can be used for Module-based CSI calculation among processing units which are not occupied by CSI calculation.

## Embodiment 12

Embodiment 12 illustrates a schematic diagram of a relationship between a value of Y and a subcarrier spacing according to one embodiment of the present application, as shown in FIG. 12. In FIG. 12, the value of the Y is related to at least one of the three: a subcarrier spacing used by the first signaling, a subcarrier spacing used by the first reference signal, or a subcarrier spacing used by the first channel information.

As one embodiment, the value of the Y is related to at least one of the three: a subcarrier spacing used by the first signaling, a subcarrier spacing used by the first reference signal, or a subcarrier spacing used by the first channel information.

As one embodiment, the value of the Y is related to a subcarrier spacing used by the first signaling.

As one embodiment, the value of the Y is related to a subcarrier spacing used by the first reference signal.

As one embodiment, the value of the Y is related to a subcarrier spacing which is used by the first channel information.

As one embodiment, the value of the Y is related to all of the following: a subcarrier spacing used by the first signaling, a subcarrier spacing used by the first reference signal, or a subcarrier spacing used by the first channel information.

As one embodiment, a subcarrier spacing used by the first signaling corresponds to $\mu_{PDCCH}$, a subcarrier spacing used by the first reference signal corresponds to $\mu_{CSI-RS}$, and a subcarrier spacing used by the first channel information corresponds to $\mu_{UL}$; and the minimum value of $\mu_{PDCCH}$, $\mu_{CSI-RS}$ and $\mu_{UL}$ is used for determining the value of the Y.

As one embodiment, a subcarrier spacing used by the first signaling corresponds to $\mu_{PDCCH}$, a subcarrier spacing used by the first reference signal corresponds to $\mu_{CSI-RS}$, and a subcarrier spacing used by the first channel information corresponds to $\mu_{UL}$; and the maximum value of $\mu_{PDCCH}$, $\mu_{CSI-RS}$ and $\mu_{UL}$ is used for determining the value of the Y.

As one embodiment, a subcarrier spacing used by the first signaling corresponds to $\mu_{PDCCH}$, a subcarrier spacing used by the first reference signal corresponds to $\mu_{CSI-RS}$, and a subcarrier spacing used by the first channel information corresponds to $\mu_{UL}$; and whether the minimum value of $\mu_{PDCCH}$, $\mu_{CSI-RS}$ and $\mu_{UL}$ is greater than 3 is used for determining the value of the Y.

## Embodiment 13

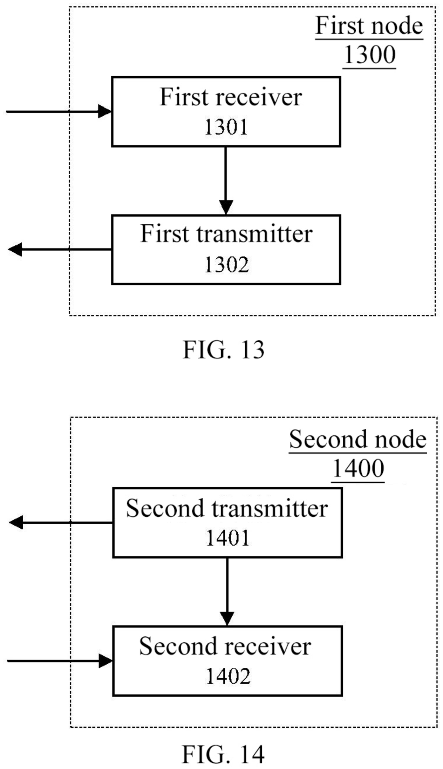

Embodiment 13 illustrates a structural block diagram of a processing apparatus used in a first node according to one embodiment of the present application, as shown in FIG. 13. In FIG. 13, a processing apparatus 1300 in a first node comprises a first receiver 1301 and a first transmitter 1302.

In Embodiment 13, the first receiver 1301 receives first signaling; and receives a first reference signal in a first reference signal resource; the first transmitter 1302 sends first channel information; the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by a recipient on the basis of the received first type is unknown to the first node;

- a generator for generating the first type is obtained on the basis of training; and
- the first type does not belong to CSI which is defined by 3GPP Rel-17 or a previous version of 3GPP Rel-17.

As one embodiment, the first channel information comprises the first type, and the value of the Y depends on a first integer; the first channel information does not comprise the first type, and the value of the Y depends on a second integer; and the first integer is different from the second integer.

As one embodiment, the first channel information comprises the first type, the value of the Y is related to whether the first channel information further comprises a target type set, and the target type set comprises at least one CSI type; and candidates of the CSI type comprise at least one of an L1-RSRP, a CRI, an RI, a PMI, a CQI, and an LI.

As one embodiment, the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

As one embodiment, the value of the Y is related to a quantity of processing units which are supported by the first node.

As one embodiment, the value of the Y is related to a quantity of unoccupied processing units which are supported by the first node.

As one embodiment, the value of the Y is related to at least one of the three: a subcarrier spacing used by the first signaling, a subcarrier spacing used by the first reference signal, or a subcarrier spacing used by the first channel information.

As one embodiment, M first-type candidate values are used for determining the first integer, and any first-type candidate value among the M first-type candidate values is one positive integer; M is a positive integer; and the M first-type candidate values are respectively associated with M CSI types, any CSI type among the M CSI types belongs to the first CSI type set, and any CSI type in the first CSI type set meets at least one of the following conditions:

- channel information which is recovered by a recipient on the basis of the received any CSI type is unknown to the first node in the present application;
- a generator for generating the any CSI type is obtained on the basis of training; and
- the any CSI type does not belong to CSI which is defined by 3GPP Rel-17 or a previous version of 3GPP Rel-17.

As one sub-embodiment of this embodiment, the M first-type candidate values respectively correspond to M CSI Reports, and the M is the maximum value between 0 and N that can meet a first condition; the N corresponds to a quantity of CSI reports which are enabled by the first node in the same OFDM symbol and occupy unoccupied XPUs; the first condition comprises:

$$\sum_{n=0}^{M-1} O_{XPU}^{(n)} \leq N_{XPU} - L,$$

wherein n is one integer between 0 and M-1, $O_{XPU}^{(n)}$ represents $O_{XPU}^{(n)}$ corresponding to CSI Report n among M CSI Reports, $N_{XPU}$ represents a quantity of XPUs which are supported by UE for simultaneous CSI calculation in a CC (Component Carrier), and $L$ represent a quantity of XPUs which are occupied for CSI reporting calculation in the same OFDM symbol.

As one embodiment, Q second-type candidate values are used for determining the second integer, and any second-type candidate value among the Q second-type candidate values is one positive integer; Q is a positive integer; and the Q second-type candidate values are respectively associated with Q CSI types, any CSI type among the Q CSI types belongs to a second CSI type set, and any CSI type in the second CSI type set is a type other than the first type.

As one sub-embodiment of this embodiment, the Q second-type candidate values respectively correspond to Q CSI Reports, and the Q is the maximum value between 0 and N1 that can meet a first condition; the N1 corresponds to a quantity of CSI reports which are enabled by the first node in the same OFDM symbol and occupy unoccupied CPUs; and the first condition comprises: $\sum_{n=0}^{Q-1} O_{CPU}^{(n)} \leq N_{CPU} - L_1$,

wherein n is one integer between 0 and Q-1, $O_{CPU}^{(n)}$ represents $O_{CPU}^{(n)}$ corresponding to CSI Report n among Q CSI Reports, $N_{CPU}$ represents a quantity of CPUs which are supported by UE for simultaneous CSI calculation in a CC, and $L_1$ represents the quantity of CPUs which are occupied for CSI reporting calculation in the same OFDM symbol.

As one embodiment, P third-type candidate values are used for determining the third integer, and any third-type candidate value among the P third-type candidate values is one positive integer; P is a positive integer; and the P third-type candidate values are respectively associated with P CSI types, any CSI type among the P CSI types belongs to the target type set, and any CSI type in the target type set belongs to CSI which is defined by 3GPP Rel-17 or a previous version of 3GPP Rel-17.

As one sub-embodiment of this embodiment, the P third-type candidate values respectively correspond to P CSI Reports, and the P is the maximum value between 0 and N1 that can meet a first condition; the N1 corresponds to a quantity of CSI reports which are enabled by the first node in the same OFDM symbol and occupy unoccupied CPUs; and the first condition comprises: $\sum_{n=0}^{P-1} O_{CPU}^{(n)} \leq N_{CPU} - L_1$,

wherein n is one integer between 0 and P-1, $O_{CPU}^{(n)}$ represents $O_{CPU}^{(n)}$ corresponding to CSI Report n among P CSI Reports, $N_{CPU}$ represents a quantity of CPUs which are supported by UE for simultaneous CSI calculation in one CC, and $L_1$ represents a quantity of CPUs which are occupied for CSI reporting calculation in the same OFDM symbol.

As one embodiment, the first node is user equipment.

As one embodiment, the first node is a relay node device.

As one embodiment, the first receiver 1301 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1302 comprises at least one of {an antenna 452, a transmitting device 454, a transmitting processor 468, a multi-antenna transmitting processor 457, a controller/processor 459, a memory 460, and a data source 467} in Embodiment 4.

## Embodiment 14

Embodiment 14 illustrates a structural block diagram of a processing apparatus used in a second node according to one embodiment of the present application, as shown in FIG. 14. In

FIG. 14, a processing apparatus 1400 in the second node comprises a second transmitter 1401 and a second receiver 1402.

In Embodiment 14, the second transmitter 1401 sends first signaling; and sends a first reference signal in a first reference signal resource; the second receiver 1402 receives first channel information; the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and a value of the Y is related to whether the first channel information comprises a first type, and the first type meets at least one of the following conditions:

- channel information which is recovered by the second node on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

As one embodiment, the first channel information comprises the first type, and the value of the Y depends on a first integer; the first channel information does not comprise the first type, and the value of the Y depends on a second integer; and the first integer is different from the second integer.

As one embodiment, the first channel information comprises the first type, the value of the Y is related to whether the first channel information further comprises a target type set, and the target type set comprises at least one CSI type; and candidates of the CSI type comprise at least one of an L1-RSRP, a CRI, an RI, a PMI, a CQI, and an LI.

As one embodiment, the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

As one embodiment, the value of the Y is related to a quantity of processing units which are supported by the first node.

As one embodiment, the value of the Y is related to a quantity of unoccupied processing units which are supported by the first node.

As one embodiment, the value of the Y is related to at least one of the three: a subcarrier spacing used by the first signaling, a subcarrier spacing used by the first reference signal, or a subcarrier spacing used by the first channel information.

As one embodiment, M first-type candidate values are used for determining the first integer, and any first-type candidate value among the M first-type candidate values is one positive integer; M is a positive integer; and the M first-type candidate values are respectively associated with M CSI types, any CSI type among the M CSI types belongs to the first CSI type set, and any CSI type in the first CSI type set meets at least one of the following conditions:

- channel information which is recovered by the second node on the basis of the received any CSI type is unknown to a sender of the first channel information;
- a generator for generating the any CSI type is obtained on the basis of training; and
- the any CSI type does not belong to CSI which is defined by 3GPP Rel-17 or a previous version of 3GPP Rel-17.

As one sub-embodiment of this embodiment, the M first-type candidate values respectively correspond to M CSI Reports, and the M is the maximum value between 0 and N that can meet a first condition; the N corresponds to a quantity of CSI reports which are enabled by the first node in the same OFDM symbol and occupy unoccupied XPUs; the first condition comprises:

$$\sum_{n=0}^{M-1} O_{XPU}^{(n)} \leq N_{XPU} - L,$$

wherein n is one integer between 0 and M-1, $O_{XPU}^{(n)}$ represents $O_{XPU}^{(n)}$ corresponding to CSI Report n among M CSI Reports, $N_{XPU}$ represents a quantity of XPUs which are supported by UE for simultaneous CSI calculation in a CC (Component Carrier), and $L$ represent a quantity of XPUs which are occupied for CSI reporting calculation in the same OFDM symbol.

As one embodiment, Q second-type candidate values are used for determining the second integer, and any second-type candidate value among the Q second-type candidate values is one positive integer; Q is a positive integer; and the Q second-type candidate values are respectively associated with Q CSI types, any CSI type among the Q CSI types belongs to a second CSI type set, and any CSI type in the second CSI type set is a type other than the first type.

As one sub-embodiment of this embodiment, the Q second-type candidate values respectively correspond to Q CSI Reports, and the Q is the maximum value between 0 and N1 that can meet a first condition; the N1 corresponds to a quantity of CSI reports which are enabled by the first node in the same OFDM symbol and occupy unoccupied CPUs; and the first condition comprises: $\sum_{n=0}^{Q-1} O_{CPU}^{(n)} \leq N_{CPU} - L_1$,

wherein n is one integer between 0 and Q-1, $O_{CPU}^{(n)}$ represents $O_{CPU}^{(n)}$ corresponding to CSI Report n among Q CSI Reports, $N_{CPU}$ represents a quantity of CPUs which are supported by UE for simultaneous CSI calculation in a CC, and $L_1$ represents the quantity of CPUs which are occupied for CSI reporting calculation in the same OFDM symbol.

As one embodiment, P third-type candidate values are used for determining the third integer, and any third-type candidate value among the P third-type candidate values is one positive integer; P is a positive integer; and the P third-type candidate values are respectively associated with P CSI types, any CSI type among the P CSI types belongs to the target type set, and any CSI type in the target type set belongs to CSI which is defined by 3GPP Rel-17 or a previous version of 3GPP Rel-17.

As one sub-embodiment of this embodiment, the P third-type candidate values respectively correspond to P CSI Reports, and the P is the maximum value between 0 and N1 that can meet a first condition; the N1 corresponds to a quantity of CSI reports which are enabled by the first node in the same OFDM symbol and occupy unoccupied CPUs; and the first condition comprises: $\sum_{n=0}^{P-1} O_{CPU}^{(n)} \leq N_{CPU} - L_1$,

wherein n is one integer between 0 and P-1, $O_{CPU}^{(n)}$ represents $O_{CPU}^{(n)}$ corresponding to CSI Report n among P CSI Reports, $N_{CPU}$ represents a quantity of CPUs which are supported by UE for simultaneous CSI calculation in one CC, and $L_1$ represents a quantity of CPUs which are occupied for CSI reporting calculation in the same OFDM symbol.

As one embodiment, the second node is a base station device.

As one embodiment, the second node is user equipment.

As one embodiment, the second node is a relay node device.

As one embodiment, the second transmitter 1401 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1402 comprises at least one of {an antenna 420, a receiving device 418, a receiving processor 470, a multi-antenna receiving processor 472, a controller/processor 475, and a memory 476} in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled airplanes, aircrafts, small airplanes, mobile phones, tablet computers, laptops, vehicle-mounted communication devices, transportation means, vehicles, RSUs, wireless sensors, Internet cards, Internet of Things terminals, RFID (Radio Frequency Identification) terminals, NB-IoT (Narrow Band Internet of Things) terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices. The base stations or system devices in the present application include but are not limited to Macro Cell base stations, Micro Cell base stations, small cell base stations, Femtocells, relay base stations, eNB (evolved Nodes B), gNBs, TRPs, GNSSs (Global Navigation Satellite Systems), relay satellites, satellite base stations, aerial base stations, RSUs, drones, test devices, such as transceiving apparatus or signaling testers that simulate some functions of the base stations, and other wireless communication devices.

Those skilled in the art should understand that the present invention may be implemented in other specified forms without departing from its core or basic features. Therefore, the embodiments disclosed at present should be regarded as descriptive rather than restrictive in any way. The scope of the invention is determined by the attached claims rather than the previous description, and all modifications within their equivalent meanings and areas are considered to be comprised therein.

## Claims

1. A first node for wireless communication, **characterized by** comprising:

   a first receiver receiving first signaling; and receiving a first reference signal in a first reference signal resource; and
   a first transmitter sending first channel information,
   wherein the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and a value of the Y is related to whether the first channel information comprises a first type, and the first type meets at least one of the following conditions:

   - channel information which is recovered by a recipient on the basis of the received first type is unknown to the first node;
   - a generator for generating the first type is obtained on the basis of training; and
   - the first type does not belong to CSI which is defined by 3GPP Rel-17 or a previous version of 3GPP Rel-17.

2. The first node according to claim 1, **characterized in that** the first channel information comprises the first type, and the value of the Y depends on a first integer;

the first channel information does not comprise the first type, and the value of the Y depends on a second integer; and the first integer is different from the second integer.

3. The first node according to claim 1 or 2, **characterized in that** the first channel information comprises the first type, the value of the Y is related to whether the first channel information further comprises a target type set, and the target type set comprises at least one CSI type; and candidates of the CSI type comprise at least one of an L1-RSRP, a CRI, an RI, a PMI, a CQI, and an LI.

4. The first node according to claim 3, **characterized in that** the first channel information comprises the first type and the target type set, and the value of the Y depends on the larger value of the first integer and a third integer; the first channel information comprises only the first type and does not comprise the target type set, and the value of the Y depends on the first integer and does not depend on the third integer; and the third integer is associated with the target type set.

5. The first node according to any one of claims 1 to 4, **characterized in that** the value of the Y is related to a quantity of processing units which are supported by the first node.

6. The first node according to any one of claims 1 to 4, **characterized in that** the value of the Y is related to a quantity of unoccupied processing units which are supported by the first node.

7. The first node according to any one of claims 1 to 4, **characterized in that** the value of the Y is related to at least one of the three: a subcarrier spacing used by the first signaling, a subcarrier spacing used by the first reference signal, or a subcarrier spacing used by the first channel information.

8. A second node for wireless communication, **characterized by** comprising:

   a second transmitter sending first signaling; and sending a first reference signal in a first reference signal resource; and
   a second receiver receiving first channel information,
   wherein the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and a value of the Y is related to whether the first channel information comprises a first type, and the first type meets at least one of the following conditions:

- channel information which is recovered by the second node on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

9. A method used in a first node for wireless communication, **characterized by** comprising:

receiving first signaling; receiving a first reference signal in a first reference signal resource; and
sending first channel information,
wherein the first signaling is used for triggering sending of the first channel information; a measurement for the first reference signal is used for generating the first channel information; the starting of a first symbol which carries the first channel information is not earlier than a Y-th symbol after the last symbol which is occupied by the first signaling; Y is a positive integer greater than 1; and a value of the Y is related to whether the first channel information comprises a first type, and the first type meets at least one of the following conditions:

- channel information which is recovered by a recipient on the basis of the received first type is unknown to the first node;
- a generator for generating the first type is obtained on the basis of training; and
- the first type does not belong to CSI which is defined by 3GPP Rel-17 or a previous version of 3GPP Rel-17.

10. A method used in a second node for wireless communication, **characterized by** comprising:

sending first signaling; sending a first reference signal in a first reference signal resource; and
receiving first channel information,
wherein the first signaling is used for triggering sending of the first channel information; a measurement for the first reference signal by a recipient of the first reference signal is used for generating the first channel information; the starting of a first symbol which carries the first channel information is not earlier than a Y-th symbol after the last symbol which is occupied by the first signaling; Y is a positive integer greater than 1; and the value of the Y is related to whether the first channel information comprises a first type, and the first type meets at least one of the following conditions:

- channel information which is recovered by the second node on the basis of the received first type is unknown to a sender of the first channel information;
- a generator for generating the first type is obtained on the basis of training; and
- the first type does not belong to CSI which is defined by 3GPP Rel-17 or a previous version of 3GPP Rel-17.

FIG. 1

FIG. 2

Control plane

300

L3

RRC — 306

L2

PDCP — 304

RLC — 303

MAC — 302

L1

PHY — 301

305

User plane

350

SDAP — 356

L2

PDCP — 354

RLC — 353

MAC — 352

L1

PHY — 351

355

FIG. 3

First communication device

Second communication device

<u>410</u>

<u>450</u>

420

452

416

471

457

468

418

454

Transmitting processor

Multi-antenna transmitting processor

Transmitting device

Transmitting device

Multi-antenna transmitting processor

Transmitting processor

Receiving device

Receiving device

460

476

475

Memory

Controller/ processor

Controller/ processor

Memory

Data source

420

452

459

467

Receiving processor

Multi-antenna receiving processor

Transmitting device

Transmitting device

Multi-antenna receiving processor

Receiving processor

Receiving device

Receiving device

470

472

418

454

458

456

FIG. 4

```
┌────────────────────────┐                    ┌────────────────────────┐
│   N2. Second node      │                    │    U1. First node      │
└───────────┬────────────┘                    └───────────┬────────────┘
            │                                              │
┌───────────┴────────────────────────────┐                │
│    S520. Send a first signaling         │                │
└───────────┬─────────────────────────────┘               │
            │                                              │
            │──────────First signaling──────────────────▶ │
            │                             ┌────────────────┴──────────────────────┐
            │                             │  S510. Receive a first signaling       │
            │                             └────────────────┬──────────────────────┘
┌───────────┴─────────────────────────────┐                │
│  S521. Send a first reference signal in  │                │
│  a first reference signal resource       │                │
└───────────┬─────────────────────────────┘                │
            │──────────First reference signal───────────▶  │
            │                             ┌────────────────┴──────────────────────┐
            │                             │  S511. Receive a first reference signal │
            │                             │  in a first reference signal resource   │
            │                             └────────────────┬──────────────────────┘
            │                             ┌────────────────┴──────────────────────┐
            │                             │  S512. Send first channel information   │
            │                             └────────────────┬──────────────────────┘
            │◀─────────First channel information─────────── │
┌───────────┴─────────────────────────────┐                │
│  S522. Receive first channel information │                │
└───────────┬─────────────────────────────┘                │
            ▼                                              ▼
         ( End )                                        ( End )
```

FIG. 5

A physical channel which is occupied by a first signaling

A physical channel which is occupied by first channel information

Y symbols          Time

FIG. 6

Value of Y  —Depend on→  First integer

(a) First channel information comprises a first type

Value of Y  —Depend on→  Second integer

(b) First channel information does not comprise a first type

FIG. 7

Value of Y  ←Is related to→  Whether first channel information comprises a target type set

First channel information comprises a first type

FIG. 8

Value of Y  —Depend on→  The larger value of a first integer and a third integer

(a) First channel information comprises a first type and a target type set

Value of Y  —Depend on→  First integer

Value of Y  —Do not depend on→  Third integer

(b) First channel information comprises a first type and does not comprise a target type set

FIG. 9

Value of Y $\longleftrightarrow$ Is related to The quantity of processing units which are supported by a first node

FIG. 10

Value of Y $\longleftrightarrow$ Is related to The quantity of unoccupied processing units which are supported by a first node

FIG. 11

Value of Y $\longleftrightarrow$ Is related to at least one of

Subcarrier spacing used by a first signaling

Subcarrier spacing used by a first reference signal

Subcarrier spacing used by first channel information

FIG. 12

First node
1300

First receiver
1301

First transmitter
1302

FIG. 13

Second node
1400

Second transmitter
1401

Second receiver
1402

FIG. 14

## INTERNATIONAL SEARCH REPORT

| International application No. |
|---|
| **PCT/CN2024/083724** |

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, CNKI, CJFD, VEN, ENTXT, ENTXTC, 3GPP, IEEE: 参考信号, 信令, 个, 符号, 测量, 信道信息, CSI, 信道状态信息, 类型, Reference signal, signaling, symbol, measur+, channel information, channel state information, type

**C. DOCUMENTS CONSIDERED TO BE RELEVANT**

| Category* | Citation of document, with indication, where appropriate, of the relevant passages | Relevant to claim No. |
|---|---|---|
| A | US 2020280420 A1 (TELECOMMUNICATIONS TECHNOLOGY RESEARCH INSTITUTE CO., LTD.) 03 September 2020 (2020-09-03)<br>entire document | 1-10 |
| A | US 2021218453 A1 (VIVO COMMUNICATION TECHNOLOGY CO., LTD.) 15 July 2021 (2021-07-15)<br>entire document | 1-10 |
| A | US 2021111776 A1 (ZTE CORP.) 15 April 2021 (2021-04-15)<br>entire document | 1-10 |
| A | WO 2023004765 A1 (LENOVO (BEIJING) CO., LTD.) 02 February 2023 (2023-02-02)<br>entire document | 1-10 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2024** | **24 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 693 966 A1

International application No.

**PCT/CN2024/083724**

| Patent document cited in search report | | | Publication date (day/month/year) | Patent family member(s) | | | Publication date (day/month/year) |
|---|---|---|---|---|---|---|---|
| US | 2020280420 | A1 | 03 September 2020 | US | 11218277 | B2 | 04 January 2022 |
| | | | | JP | 2020533882 | A | 19 November 2020 |
| | | | | JP | 7140827 | B2 | 21 September 2022 |
| | | | | WO | 2019047598 | A1 | 14 March 2019 |
| | | | | EP | 3681076 | A1 | 15 July 2020 |
| | | | | EP | 3681076 | A4 | 21 October 2020 |
| | | | | EP | 3681076 | B1 | 23 August 2023 |
| | | | | KR | 20200044120 | A | 28 April 2020 |
| US | 2021218453 | A1 | 15 July 2021 | EP | 3860019 | A1 | 04 August 2021 |
| | | | | EP | 3860019 | A4 | 02 March 2022 |
| | | | | JP | 2022501967 | A | 06 January 2022 |
| | | | | JP | 7285920 | B2 | 02 June 2023 |
| | | | | SG | 11202103262 | PA | 29 April 2021 |
| | | | | KR | 20210065181 | A | 03 June 2021 |
| | | | | AU | 2019351179 | A1 | 27 May 2021 |
| | | | | AU | 2019351179 | B2 | 22 December 2022 |
| | | | | CA | 3114818 | A1 | 02 April 2020 |
| US | 2021111776 | A1 | 15 April 2021 | EP | 3817244 | A1 | 05 May 2021 |
| | | | | EP | 3817244 | A4 | 06 July 2022 |
| | | | | US | 11398859 | B2 | 26 July 2022 |
| | | | | WO | 2020001428 | A1 | 02 January 2020 |
| WO | 2023004765 | A1 | 02 February 2023 | None | | | |